Europäisches Patentamt

European Patent Office

Office européen des brevets

(11) Veröffentlichungsnummer: **0 243 772**

**A2**

(12) **EUROPÄISCHE PATENTANMELDUNG**

(21) Anmeldenummer: **87105446.6**

(22) Anmeldetag: **13.04.87**

(51) Int. Cl.³: **G 01 N 21/41**

(30) Priorität: **29.04.86 DE 3614416**

(43) Veröffentlichungstag der Anmeldung:
**04.11.87 Patentblatt 87/45**

(84) Benannte Vertragsstaaten:
**BE CH DE FR GB IT LI NL**

(71) Anmelder: **BROWN, BOVERI & CIE Aktiengesellschaft**
**Kallstadter Strasse 1**
**D-6800 Mannheim 31(DE)**

(72) Erfinder: **Harbach, Friedrich, Dr., Dipl.-Phys.**
**Bürgerstrasse 2**
**D-6900 Heidelberg(DE)**

(72) Erfinder: **Meinhold, Henner, Dr., Dipl.-Phys.**
**Zwischen den Bächen 14a**
**D-6902 Sandhausen(DE)**

(74) Vertreter: **Rupprecht, Klaus, Dipl.-Ing. et al,**
**c/o BROWN, BOVERI & CIE AG Postfach 10 03 51**
**Zentralbereich Patente**
**D-6800 Mannheim 1(DE)**

(54) Verfahren zur optischen Messung einer physikalischen oder chemischen Grösse und optischer Sensor hierzu.

(57) Bei diesem Verfahren strahlt ein von einem Sender ausgestrahlter Lichtstrahl (1) auf einen aus drei Schichten bestehenden optischen Sensor (14). Das Trennungsmedium (3) der mittleren Schicht ist optisch dünner als die Medien (2,4) der beiden äußeren Schichten. Vorzugsweise werden die äußeren Schichten durch Prismen (7,8) gebildet, die durch Abstandsstücke (9) an einer dichten Berührung gehindert werden, so daß ein Spalt (12) aus dem Trennungsmedium (3) verbleibt. Der Lichtstrahl (1) wird an der Grenzfläche zwischen erster und zweiter Schicht in einen reflektierten Teilstrahl (5) und einen durch die zweite und dritte Schicht weiterlaufenden Teilstrahl (6) zerlegt. Beide Teilstrahlen (5,6) werden mit Hilfe von Empfängern registriert. Durch die zu messende physikalische oder chemische Größe, z.B. Druck, Temperatur, Zusammensetzung, magnetische oder elektrische Feldstärke werden der Brechungsindex oder die geometrische Dicke des Trennungsmediums (3) verändert. Demzufolge verändern sich die Intensitäten der Teilstrahlen, woraus die zu messende physikalische oder chemische Größe bestimmt werden kann.

Fig.2

Croydon Printing Company Ltd.

B R O W N , B O V E R I & C I E   AKTIENGESELLSCHAFT

Mannheim

Mp.-Nr. 569/86

25. April 1986

ZPT/P3-Pn/Bt

## Verfahren zur optischen Messung einer physikalischen oder chemischen Größe und optischer Sensor hierzu

Die Erfindung bezieht sich auf ein Verfahren zur optischen Messung einer physikalischen oder chemischen Größe gemäß dem Oberbegriff des Anspruchs 1 und auf einen optischen Sensor zur Durchführung des Verfahrens. Ein solches Verfahren zur optischen Messung einer physikalischen oder chemischen Größe und ein optischer Sensor hierzu sind aus J. Hengstenberg, B. Sturm. O. Winkler, "Messen, Steuern und Regeln in der chemischen Technik", Band 1, Betriebsmeßtechnik I, Messung von Zustandsgrößen, Stoffmengen und Hilfsgrößen, 3. Auflage 1980, Springer-Verlag, Berlin-Heidelberg-NewYork, Seite 649 bis 654 bekannt. Dabei werden zur Meßwerterfassung sichtbares Licht oder Laserstrahlen verwendet. Die vorgeschlagenen optischen Sensoren können stets nur zur Erfassung einer einzigen physikalischen oder chemischen Größe eingesetzt werden.

Der Erfindung liegt davon ausgehend die Aufgabe zugrunde, ein Verfahren zur optischen Messung einer physikalischen oder chemischen Größe der eingangs genannten Art anzugeben, das universell für viele und unterschiedliche Größen geeignet ist. Darüberhinaus soll ein optischer Sensor zur Durchführung des Verfahrens angegeben werden, der bei nur geringem Umbau für eine Reihe von Meßaufgaben einsetzbar ist.

Diese Aufgabe wird bezüglich des Verfahrens in Verbindung mit den Merkmalen des Oberbegriffes erfindungsgemäß durch die im Kennzeichen des Anspruches 1 angegebenen Merkmale gelöst. Bezüglich des optischen Sensors wird die Aufgabe durch die im Anspruch 4 gekennzeichneten Merkmale gelöst.

Die mit der Erfindung erzielbaren Vorteile bestehen insbesondere darin, daß bei Anwendung des angegebenen Verfahrens zur optischen Messung einer physikalischen oder chemischen Größe ein Mehrzweck-Sensor geschaffen wird, der nicht nur für die Messung einer einzigen Größe geeignet ist, sondern bei nur geringer Variation für unterschiedliche Meßaufgaben, wie Druckmessung, Temperaturmessung, Messung von elektrischen oder magnetischen Feldern einsetzbar ist. Ein solcher Mehrzweck-Sensor kann rationeller hergestellt werden, da größere Stückzahlen erforderlich sind. Ein solcher Mehrzweck-Sensor kann auch rationeller eingesetzt werden, da trotz unterschiedlicher Meßaufgaben eine einheitliche Signalaufbereitung verwendbar ist. Weitere Vorteile sind der nachfolgenden Beschreibung entnehmbar.

Vorteilhafte Ausgestaltungen der Erfindung sind in den Unteransprüchen gekennzeichnet.

Die Erfindung wird nachstehend anhand der in den Zeichnungen dargestellten Ausführungsbeispiele erläutert.

Es zeigen:

Fig. 1 . das Meßprinzip der Erfindung,

Fig. 2 eine prinzipielle Ausführungsform des optischen Sensors,

Fig. 3, 4 Ausführungsvarianten, bei denen der Brechungsindex oder die geometrische Dicke variabel sind,

Fig. 5, 6, 7 Ausführungsvarianten, bei denen nur die geometrische Dicke variabel ist,

Fig, 8, 9, 10 verschiedene Varianten bei der Signalaufbereitung.

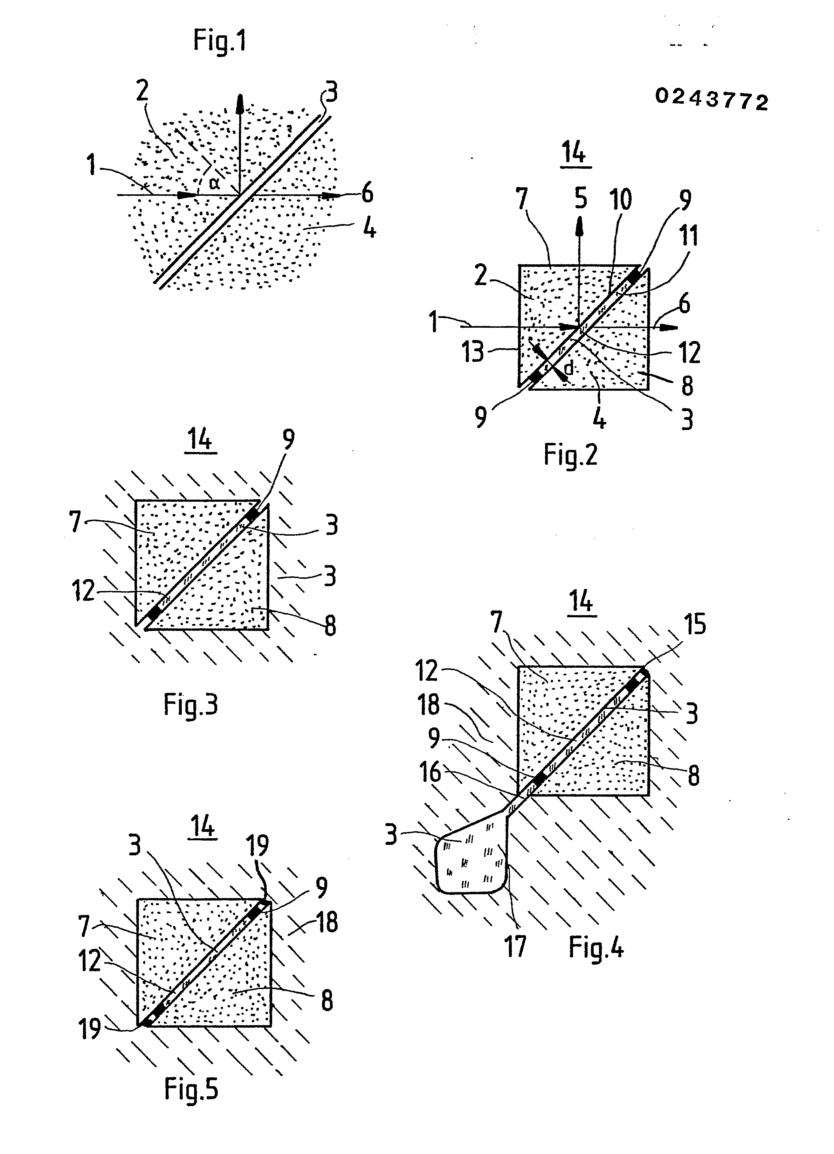

In Fig. 1 ist das für die Erfindung verwendete Meßprinzip dargestellt. Ein Lichtstrahl 1 durchläuft ein Medium 2 und trifft auf eine ideale Grenzfläche dieses Mediums 2 zu einem optisch dünneren Trennungsmedium 3 unter einem Einfallswinkel $\alpha$ , der größer ist als der Grenzwinkel $\alpha_{tot}$ der Totalreflexion zwischen den Medien 2 und 3. Ohne das der Grenzfläche des Mediums 2 gegenüberliegende Medium 4 wird der Lichtstrahl 1 dann zu 100% in einen Teilstrahl 5 umgelenkt (Totalreflextion). Ist das Medium 4 jedoch hinreichen nahe dem Medium 2, ohne es allerdings zu berühren, und ist das Medium 4 optisch dichter als das Trennungsmedium 3, wird ein Teil der Intensität des Lichtstrahls 1 im Medium 4 als Teilstrahl 6 weiterlaufen. Der an der Grenzfläche des Mediums 2 reflektierte Teilstrahl 5 ist dementsprechend in seiner Intensität geschwächt (Abschwächung der Totalreflextion).

Die Stärke dieses "optischen Tunneleffektes" und die damit verknüpfte Abschwächung einer Totalreflexion ist vom Abstand der beiden Medien 2 und 4 voneinander und vom Brechungsindex des Trennungsmediums 3 abhängig. Ein optischer Sensor, der auf der Basis dieses Effektes beruht, kann verschiedenartige, nachfolgend beschriebene Ausführungsformen haben.

Eine prinzipielle Ausführungsform des optischen Sensors ist in Fig. 2 dargestellt. Es sind zwei Prismen 7 bzw. 8 zu erkennen, die durch Abstandsstücke 9 an einer dichten Berührung gehindert werden, so daß zwischen den Prismengrundflächen 10 bzw. 11 (Grenzflächen) ein Spalt 12 der geometrischen Dicke d bleibt, der aus einem Trennungsmedium 3 besteht, das optisch dünner ist als das Material der Prismen 7 bzw. 8, d.h. als die Medien 2 bzw. 4.

Die Prismen 7 und 8 sind bevorzugt, aber nicht notwendigerweise, aus dem gleichen Material. In der bevorzugten Ausführungsform haben die Prismen 7 und 8 den Querschnitt eines rechtwinkligen Dreiecks und ergäben dicht zusammengefügt einen Würfel. Die Abstandsstücke 9 können lose eingelegt oder mit einem oder beiden Prismen 7, 8 verklebt sein. Sie können aus mehreren Teilstücken bestehen oder als geschlossener Ring ausgeführt sein.

Die geometrische Dicke d des Spaltes 12 zwischen den Prismen 7 und 8 kann eine geeignete optisch wirksame Größe zwischen 1nm und 100µm haben. Die gewählte geometrische Dicke d hängt insbesondere auch von der Wellenlänge des benutzten Lichtes (einschließlich UV und IR) ab. Das eingestrahlte Licht ist bevorzugt monochromatisch (z.B. ein Laserstrahl). Bei der bevorzugten Ausführungsform fällt der Lichtstrahl 1 senkrecht auf die Außenfläche 13 des Prismas 7.

Damit das beschriebene Bauteil als optischer Sensor 14 eingesetzt werden kann, muß der optisch wirksame Teil des Spaltes 12 hinsichtlich der optischen Dicke n · d variabel sein, wobei n der Brechungsindex des Trennungsmediums 3 ist. Welche der beiden Teilgrößen n und d auf welche Weise variiert wird, hängt von der zu messenden Größe ab. Nachfolgend werden mehrere Beispiele zur Variation der optischen Dicke n · d beschrieben.

In den Figuren 3 und 4 sind Ausführungsvarianten des optischen Sensors 14 dargestellt, bei denen der Brechungsindex n des Trennungsmediums 3 im Spalt 12 variabel ist, d.h. der Spalt 12 ist mit einem Trennungsmedium 3 (Gas) gefüllt, das auf eine Änderung des physikalischen oder chemischen Zustandes, beispielsweise Temperatur, Druck oder Zusammensetzung, mit einer hinreichend großen Änderung seines Brechungsindex n reagiert. Der aus den Prismen 7, 8, den Abstandsstücken 9 und dem Spalt 12 bestehende optische Sensor 14 kann dabei ganz in dem Trennungsmedium 3 eingebettet sein, wie in Fig. 3 gezeigt, oder aber der Spalt 12 ist auf geeignete Weise mit dem als Probemediums dienenden Trennungsmedium 3 verbunden, wie in Fig. 4 dargestellt.

Bei der Variante gemäß Fig. 4 ist der Spalt 12 teilweise durch eine Dichtung 15 verschlossen. Die Dichtung 15 weist eine Öffnung zum Anschluß eines Rohres 16 auf. Das Rohr 16 ist mit einem Gefäß 17 verbunden. Während das Gefäß 17, das Rohr 16 und der Spalt 12 mit dem Trennungsmedium 3 (Probemedium) gefüllt sind, ist der optische Sensor 14 selbst im Umgebungsmedium 18 eingebettet.

Die Ausführungsvariante gemäß Fig. 3 kann beispielsweise auch für einen optischen Sensor 14 Anwendung finden, dessen Meßaufgaben im Bereich der Magnetostriktion oder der Elektrostriktion liegen. Hierzu sind die Abstandsstücke 9 aus magneto- oder elektrostriktivem Material auszubilden. Hierdurch ergibt sich eine Ausdehnung bzw. Zusammenziehung der Abstandsstücke 9 z.B. bei Einfluß eines magnetischen Feldes, was zur Variation der geometrischen Dicke d des Spaltes 12 führt. Mit einem derartigen Sensor 14 sind beispielsweise Magnetfeldmessungen möglich.

Darüber hinaus kann der gemäß Fig. 3 ausgeführte Sensor 14 auch für Temperaturmessungen eingesetzt werden, wenn die Abstandsstücke 9 aus einem Material mit hohem thermischem Ausdehnungskoeffizienten bestehen. Durch die thermische Ausdehnung bzw. Zusammenziehung der Abstandsstücke 9 wird die geometrische Dicke d des Spaltes 12 variiert.

Gemäß einer weiteren Ausfürungsvariante des optischen Sensors 14 können sowohl das Trennungsmedium 3 im Spalt 12 als auch die Abstandsstücke 9 inert ausgeführt sein, mit Ausnahme der Elastizität der Abstandsstücke 9. In diesem Fall wird durch die Umgebungsbedingungen ein variabler Druck auf die Abstandsstücke 9 ausgeübt. Der Druck kann dabei durch das gesamte Umgebungsmedium 18 auf den Sensor 14 ausgeübt werden, wozu der Spalt 12 dicht gegen das Umgebungsmedium abzuschließen ist.

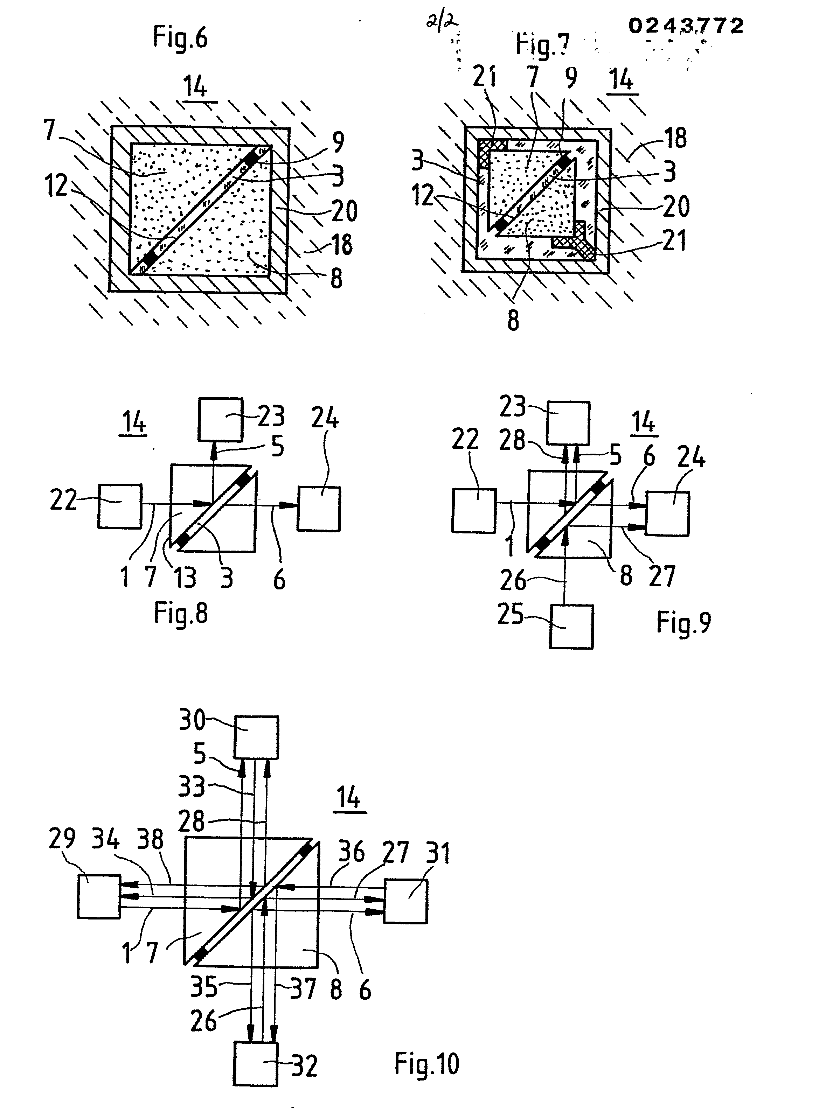

In den Figuren 5 und 6 sind Ausführungsbeispiele hierzu dargestellt. Bei der Variante gemäß Fig. 5 dient eine elastische Dichtung 19 zur gasdichten Abdichtung des Spaltes 12 gegen das Umgebungsmedium 18. Bei der Variante gemäß Fig. 6 sind die Außenflächen der Prismen 7, 8 von einem Gehäuse 20 umschlossen, wobei das Gehäuse 20 gleichzeitig den Spalt 12 abdichtet.

Bei einer weiteren Variante gemäß Fig. 7 ist ebenfalls ein Gehäuse 20 vorgesehen. Dabei sind die beiden sich diagonal gegenüberliegenden Außenkanten der Prismen 7, 8 über Fassungen 21 mit dem Gehäuse 20 verbunden. Das Trennungsmedium 3 im Spalt 12 befindet sich auch im Gehäuse-Innenraum. Bei dieser Variante bewirkt die zu messende Größe eine Ausdehnung bzw. Zusammenziehung der Fassungen 21, während die Abstandsstücke 9 elastisch ausgebildet sind. Dies führt zu einer Variation der geometrischen Dicke d in Abhängigkeit der zu messenden Größe.

Dabei können die Fassungen beispielsweise aus einem elektro- oder magnetostriktiven Material ausgeführt sein, wodurch z.B. ein optisches Sensor zur Magnetfeldmessung gebildet wird. Desweiteren können die Fassungen 21 beispielsweise aus einem Material mit hohem thermischem Ausdehnungskoeffizienten ausgeführt sein, wodurch ein Sensor zur Temperaturmessung gebildet wird.

Bei allen Ausführungsbeispielen wird das gleiche Sensor-Bauprinzip verwendet, d.h. beim optischen Sensor 14 handelt es sich um einen Mehrzweck-Sensor. Im Falle der Varianten gemäß Fig. 3 und 7 kann derselbe Sensor für verschiedene Meßaufgaben eingesetzt werden. Es müssen jeweils nur die Abstandsstücke 9 bzw. die empfindliche Fassung 21 ausgetauscht werden. Beispielsweise wird statt einer magnetostriktiven Komponente für Magnetfeldmessungen eine Komponente aus einem Material mit hohem thermischem Ausdehnungskoeffizienten für Temperaturmessungen benutzt.

Ein solcher Austausch beeinflußt nicht die Signalaufbereitung. Gemessen werden bei allen Varianten die Intensitäten der Teilstrahlen 5 und 6, und zwar außerhalb des optischen Sensors 14 und nach den allgemein bekannten Verfahren der optischen Signalerfassung und -auswertung.

In Fig. 8 ist ein Ausführungsbeispiel hierzu dargestellt. Der Lichtstrahl 1 wird hierbei von einem ersten Sender 22 auf die Außenfläche 13 des Prismas 7 ausgestrahlt. Ein erster Empfänger 23 bzw. ein zweiter Empfänger 24 registrieren die Teilstrahlen 5 bzw. 6. Die Intensitäten der Lichtstrahlen 5 und 6 variieren je nach optischer Dicke n · d des Mediums 3. Zur Kopplung des optischen Sensors 14 mit dem Sender 22 und den Empfängern 23, 24 können Lichtleitfasern eingesetzt werden.

Um eine höhere Zuverlässigkeit des optischen Sensors 14 zu gewährleisten, ist es empfehlenswert, nicht nur die Intensitäten der Teilstrahlen 5 und 6 mit geeigneten Empfängern 23 und 24 zu registrieren, sondern zusätzlich einen zweiten Sender 25 vorzusehen, der einen Lichtstrahl 26 auf diejenige Außenfläche des Prismas 8 ausstrahlt, die dem ersten Empfänger 23 gegenüberliegt.

In Fig. 9 ist ein Beispiel hierzu dargestellt. Der zusätzliche Lichtstrahl 26 wird teilweise in einen zum zweiten Empfänger 24 gelangenden Teilstrahl 27 umgelenkt (reflektiert) und läuft teilweise als Teilstrahl 28 zum ersten Empfänger 23 weiter. Bei symmetrischer Auslegung des optischen Sensors 14 gelten für den Lichtstrahl 26 und die daraus resultierenden Teilstrahlen 27, 28 die gleichen Bedingungen wie für den Lichtstrahl 1 und die daraus resultierenden Teilstrahlen 5, 6.

Aus Gründen der Übersichtlichkeit sind die optischen Wege für die einzelnen Teilstrahlen in Fig. 9 räumlich getrennt dargestellt. Im praktischen Fall fallen die Teilstrahlen 5 und 28 bzw. 6 und 27 jedoch zusammen und können jeweils von einem einzigen Empfänger 23 bzw. 24 registriert werden, so daß sich eine aus zwei Sendern und zwei Empfängern bestehende Vierpol-Anordnung ergibt.

Durch parallele oder alternierende Messung der Aufteilungsverhältnisse zwischen den aus den Lichtstrahlen 1 bzw. 26 hervorgehenden Teilstrahlen 5, 6 bzw. 27, 28 lassen sich bei geeigneter Auswertung die unterschiedlichen Dämpfungsverluste in den zugehörigen Zuleitungen zum optischen Sensor 14 eliminieren.

Bei einer weiteren Ausführungsform gemäß Fig. 10 werden gekoppelte Empfänger/Sender 29, 30, 31, 32 anstelle der Sender 22, 25 und der Empfänger 23, 24 eingesetzt, d.h. jeder Empfänger für Teilstrahlen ist gleichzeitig auch Sender für Lichtstrahlen und umgekehrt. Somit ergibt sich eine aus vier gekoppelten Empfängern/Sendern bestehende Vierpol-Anordnung. Der Empfänger/Sender 29 strahlt dabei einen Lichtstrahl 1 auf eine Außenfläche des Prismas ab, der in einen reflektierten Teilstrahl 5 zum Empfänger/Sender 30 und einen weiterlaufenden Teilstrahl 6 zum Empfänger/Sender 31 zerlegt wird. Der vom Empfänger/Sender 30 auf eine weitere Außenfläche des Prismas 7 abgestrahlte Lichtstrahl 33 wird in einen reflektierten Teilstrahl 34 zum Empfänger/Sender 29 und einen weiterlaufenden Teilstrahl 35 zum Empfänger/Sender 32 zerlegt. Der Empfänger/Sender 31 strahlt einen Lichtstrahl 36 auf eine Außenfläche des Prismas 8 ab, der in einen reflektierten Teilstrahl 37 zum Empfänger/Sender 32 und einen weiterlaufenden Teilstrahl 38 zum Empfänger/Sender 29 zerlegt wird. Der vom Empfänger/Sender 32 auf eine weitere Außenfläche des Prismas 8 abgestrahlte Lichtstrahl 26 wird in einen reflektierten Teilstrahl 27 zum Empfänger/Sender 31 und einen weiterlaufenden Teilstrahl 28 zum Empfänger/Sender 30 zerlegt. Mit Hilfe dieser gekoppelten Empfänger/Sender 29 bis 32 können die Intensitäten der Teilstrahlen 5, 6, 27, 28 an den Startpunkten der Teilstrahlen ermittelt und mit der Ursprungssituation 1/5,6 verglichen werden.

## A n s p r ü c h e

1. Verfahren zur Messung einer physikalischen oder chemischen Größe mit Hilfe eines optischen Sensors, <u>dadurch gekennzeichnet,</u> daß ein Lichtstrahl (1) auf einen aus drei Schichten bestehenden optischen Sensor (14) gestrahlt wird, wobei das Trennungsmedium (3) der mittleren Schicht optisch dünner als die Medien (2,4) der beiden äußeren Schichten ist und hinsichtlich seiner optischen Dicke (n · d) durch die zu messende physikalische oder chemische Größe verändert wird, daß der an der Grenzfläche zwischen erster und zweiter Schicht reflektierte Teilstrahl (5) und der durch die zweite und dritte Schicht weiterlaufende Teilstrahl (6) registriert werden und daß die zu messende physikalische oder chemische Größe aus den Intensitäten der registrierten Teilstrahlen (5,6) bestimmt wird.

2. Verfahren nach Anspruch 1, dadurch gekennzeichnet, daß der Brechungsindex (n) des Trennungsmediums (3) der mittleren Schicht durch die zu messende physikalische oder chemische Größe verändert wird.

3. Verfahren nach Anspruch 1, dadurch gekennzeichnet, daß die geometrische Dicke (d) des Trennungsmediums (3) der mittleren Schicht durch die zu messende physikalische oder chemische Größe verändert wird.

4. Optischer Sensor zur Durchführung des Verfahrens nach Anspruch 1, dadurch gekennzeichnet, daß zwei Prismen (7,8) als äußere Medien (2,4) vorgesehen sind, die durch Abstandsstücke (9) an einer dichten Berührung so gehindert werden, daß sich ein Spalt (12) mit dem Trennungsmedium (3) zwischen den Prismengrundflächen (10,11) bildet.

5. Optischer Sensor nach Anspruch 4, dadurch gekennzeichnet, daß die Prismen (7,8) den Querschnitt eines rechtwinkligen Dreiecks aufweisen.

6. Optischer Sensor nach Anspruch 4, dadurch gekennzeichnet, daß die Abstandsstücke (9) lose zwischen den Prismengrundflächen (10,11) eingelegt sind.

7. Optischer Sensor nach Anspruch 4, dadurch gekennzeichnet, daß die Abstandsstücke (9) mit einer oder beiden Prismengrundflächen (10,11) verklebt sind.

8. Optischer Sensor nach Anspruch 4, dadurch gekennzeichnet, daß die Abstandsstücke (9) aus mehreren Teilstücken bestehen.

9. Optischer Sensor nach Anspruch 4, dadurch gekennzeichnet, daß die Abstandsstücke (9) als geschlossener Ring ausgebildet sind.

10. Optischer Sensor nach einem der vorstehenden Ansprüche 4 bis 9, dadurch gekennzeichnet, daß ein Trennungsmedium (3) einsetzbar ist, dessen Brechungsindex (n) in Abhängigkeit von Änderungen des physikalischen oder chemischen Zustandes variiert.

0243772

11. Optischer Sensor nach einem der Ansprüche 4 bis 9, dadurch gekennzeichnet, daß die Abstandsstücke (9) aus magnetostriktivem Material bestehen.

12. Optischer Sensor nach einem der Ansprüche 4 bis 9, dadurch gekennzeichnet, daß die Abstandsstücke (9) aus elektrostriktivem Material bestehen.

13. Optischer Sensor nach einem der Ansprüche 4 bis 9, dadurch gekennzeichnet, daß die Abstandsstücke (9) aus einem Material mit hohem thermischen Ausdehnungskoeffizienten bestehen.

14. Optischer Sensor nach einem der Ansprüche 4 bis 9, dadurch gekennzeichnet, daß die Abstandsstücke (9) aus einem Material mit hoher Elastizität bestehen.

15. Optischer Sensor nach einem der Ansprüche 4 bis 14, dadurch gekennzeichnet, daß der Spalt (12) zum Umgebungsmedium hin geöffnet ist.

16. Optischer Sensor nach einem der Ansprüche 4 bis 14, dadurch gekennzeichnet, daß der Spalt (12) dicht gegen das Umgebungsmedium abgeschlossen ist.

17. Optischer Sensor nach einem der Ansprüche 4 bis 14, dadurch gekennzeichnet, daß der Spalt (12) zum Umgebungsmedium hin verschlossen und mit einem Probemediuum verbunden ist.

18. Optischer Sensor nach einem der Ansprüche 4 bis 14, dadurch gekennzeichnet, daß die Prismen (7,8) von einem Gehäuse (20) umschlossen sind.

19. Optischer Sensor nach Anspruch 18, dadurch gekennzeichnet, daß zwischen den Außenkanten der Prismen (7,8) und den Innenkanten des Gehäuses (20) Fassungen (21) vorgesehen sind.

20. Optischer Sensor nach Anspruch 19, dadurch gekennzeichnet, daß die Fassungen (21) aus magnetostriktivem Material bestehen.

21. Optischer Sensor nach Anspruch 19, dadurch gekennzeichnet, daß die Fassungen (21) aus elektrostriktivem Material bestehen.

22. Optischer Sensor nach Anspruch 19, dadurch gekennzeichnet, daß die Fassungen (21) aus einem Material mit hohem Ausdehnungskoeffizienten bestehen.

23. Optischer Sensor nach einem der vorstehenden Ansprüche, dadurch gekennzeichnet, daß zur Signalaufbereitung ein Sender (22) und zwei Empfänger (23,24) vorgesehen sind.

24. Optischer Sensor nach einem der vorstehenden Ansprüche, dadurch gekennzeichnet, daß zur Signalaufbereitung zwei Sender (22,25) und zwei Empfänger (23,24) vorgesehen sind, wobei sich die beiden Sender und die beiden Empfänger nicht gegenüber liegen.

25. Optischer Sensor nach einem der vorstehenden Ansprüche, dadurch gekennzeichnet, daß zur Signalaufbereitung vier gekoppelte Empfänger/Sender (29,30,31,32) vorgesehen sind.

Fig.1

0243772

Fig.2

Fig.3

Fig.4

Fig.5

Fig.6

Fig.7

Fig.8

Fig.9

Fig.10